(19) Europäisches Patentamt
European Patent Office
Office européen des brevets

(11) EP 1 446 450 B1

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **02716819.4**

(22) Anmeldetag: **04.03.2002**

(51) Int Cl.:
***C08L 53/00*** *(2006.01)* ***C09J 153/00*** *(2006.01)*
***C08L 53/02*** *(2006.01)* ***C09J 153/02*** *(2006.01)*
***C08F 293/00*** *(2006.01)*

(86) Internationale Anmeldenummer:
**PCT/EP2002/002309**

(87) Internationale Veröffentlichungsnummer:
**WO 2003/000794 (03.01.2003 Gazette 2003/01)**

(54) **HAFTKLEBEMASSEN AUF BASIS VON BLOCKCOPOLYMEREN DER STRUKTUR P(A)-P(B)-P(A) UND P(B)-P(A)-P(B)**

ADHESIVE MASSES BASED ON BLOCK CO-POLYMERS OF STRUCTURE P(A)-P(B)-P(A) AND P(B)-P(A)-P(B)

MATIERES ADHESIVES A BASE DE COPOLYMERES EN BLOC DE STRUCTURE P(A)-P(B)-P(A) ET P(B)-P(A)-P(B)

(84) Benannte Vertragsstaaten:
**AT BE CH CY DE DK ES FI FR GB GR IE IT LI LU MC NL PT SE TR**

(30) Priorität: **20.06.2001 DE 10129608**

(43) Veröffentlichungstag der Anmeldung:
**18.08.2004 Patentblatt 2004/34**

(73) Patentinhaber: **tesa SE**
**22848 Norderstedt (DE)**

(72) Erfinder:
- **DOLLASE, Thilo**
  **22391 Hamburg (DE)**
- **HUSEMANN, Marc**
  **22605 Hamburg (DE)**
- **LÜHMANN, Bernd**
  **22844 Norderstedt (DE)**

(74) Vertreter: **Stubbe, Andreas**
**tesa SE**
**Kst. 9500**
**Hugo-Kirchberg-Strasse 1**
**22848 Norderstedt (DE)**

(56) Entgegenhaltungen:
**EP-A- 0 457 566** **EP-A- 0 590 723**
**EP-A- 0 683 187** **EP-A- 0 863 184**
**EP-A- 1 008 640** **WO-A-00/12645**
**WO-A-00/39233** **WO-A-01/92415**
**US-A- 4 377 655** **US-A- 5 292 795**
**US-A- 5 403 658**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 446 450 B1

## Beschreibung

Die Erfindung betrifft Blockcopolymerblends und Haftklebemassen auf der Basis von Blockcopolymeren des allgemeinen Typs P(A)-P(B)-P(A) und P(B)-P(A)-P(B).

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden häufig Polyacrylate gegenüber anderen Klebemassensystemen bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, daß sie für den Hotmelt-Extrusionsprozeß nicht gut geeignet sind, es durch Scherung im Extruder zum Abbau des Polymers kommen kann und damit einer Molekulargewichtsreduktion. Durch diese Schädigung wird das klebtechnische Niveau deutlich herabgesetzt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unterschiedliche Konzepte zur Verringerung der Fließviskosität und damit der leichteren Extrusionsbeschichtung dieser Haftklebemassen untersucht.

In der Technik werden verschiedene Konzepte verfolgt, um dieses Ziel zu erreichen. Eine Möglichkeit dazu ist die sehr effiziente Vernetzung einer niedrigviskosen und unpolaren Acrylatklebemasse erst auf dem Träger. Acrylate mit elektronendrückenden Gruppen werden copolymerisiert und stabilisieren während der UV- oder ESH-Vernetzung (ESH: Elektronenstrahlhärtung) entstehende Radikale. Beispiele hierfür sind tertiäre Amine enthaltende Monomere [WO 96/35725], tertiäres Butylacrylamid als Monomer [US 5,194,455] und Tetrahydrofurylacrylate [EP 0 343 467 B1]. Ein weiteres Konzept der effizienten Vernetzung ist die Copolymerisation von UV-Photoinitiatoren in die Polyacrylatkette. So wurde z.B. Benzoinacrylat als Comonomer eingesetzt und die Vernetzung auf dem Träger mit UV-Licht durchgeführt [DE 27 43 979 A1]. In der US 5,073,611 wurden dagegen Benzophenon und Acetophenon als copolymerisierbare Monomere verwendet.

Eine sehr effiziente Vernetzung findet strahlenchemisch bei Doppelbindungen enthaltenden Polyacrylaten statt [US 5,741,543].

Styrol-Isopren-Styrol-Blockcopolymere (SIS) sind dagegen weit verbreitete Elastomere für Hotmelt-verarbeitbare Haftklebemassen [Herstellverfahren: US 3,468,972; US 3,595,941; Anwendung in Haftklebemassen: US 3,239,478; US 3,935,338]. Die gute Verarbeitbarkeit wird durch ein geringeres Molekulargewicht und durch eine spezielle Morphologie erreicht [EP 0 451 920 B1]. Diese Haftklebemassen sind sehr gut mit UV-Licht unter Anwesenheit von Photoinitiatoren oder mit Elektronenstrahlung vernetzbar, da die Mittelblöcke eine Vielzahl von Doppelbindungen enthalten.

Dennoch besitzen diese Elastomere Nachteile, wie beispielsweise die starke Alterung unter UV-Licht (also auch im Tageslicht) und in einer Sauerstoff/Ozon-haltigen Atmosphäre. Eine weitere für die Anwendung sehr ungünstige Eigenschaft ist die relativ geringe Wärmescherfestigkeit durch den Einsatz von Polystyrol als Hartblockdomäne. Diese Haftklebemassen sind daher für längerfristige Außenverklebungen und für Anwendungen in höheren Temperaturbereichen nicht geeignet. Dasselbe gilt auch für andere Blockcopolymere, die einen zumindest eine Doppelbindung enthaltenden Mittelblock besitzen [US 5,851,664].

Eine Lösung der Alterungsproblematik, der Hotmeltverarbeitbarkeit, der hohen Kohäsion und der effizienten strahlenchemischen Vernetzung liefert die Kombination aus SIS-Polymeren und Polyacrylaten. So wurden in der US H1,251 Acrylat-enthaltende Dien-Copolymere für Hotmelt-Anwendungen beschrieben, die jedoch ebenfalls - bedingt durch die hohe Anzahl der verbleibenden Doppelbindungen - der Alterung unterliegen.

In der US 5,314,962 werden A-B-A-Blockcopolymere als Elastomere für Klebemassen beschrieben, die aber als kohäsionsbildendes Kriterium nur die A-Domänenbildung besitzen und somit - insbesondere bei hohen Temperaturen - nicht sehr scherfest sind.

In der EP 0 921 170 A1 werden A-B-A-Blockcopolymere beschrieben, die mit mindestens 40 % Harzzusätzen modifiziert werden. Solche Haftklebemassen sind durch den hohen Harzzusatz extrem hart und weisen nahezu keinen Tack auf. Des weiteren werden ebenfalls die Klebkräfte, insbesondere auf Oberflächen mit einer geringen Oberflächenenergie stark herabgesetzt. US5403658, US5292795, WO0012645, WO0192415 beschreiben Blockcopolymerzusammensetzungen mit Blockcopolymeren auf Acrylatbasis. Aufgabe der Erfindung ist es daher, verbesserte Haftklebemassen auf Polyacrylatbasis zur Verfügung zu stellen, die die Nachteile des Standes der Technik nicht oder nur in verminderter Weise aufzeigen, die also gegenüber konventionellen Haftklebemassen auf A-B-A Blockcopolymerbasis (A = Hartblock; B = Polyacrylat und somit Elastomerblock) verbesserte klebtechnische Eigenschaften, insbesondere Klebkräfte, erzielen,

ohne daß dabei die für die Verwendung als Haftklebemasse günstigen Eigenschaften verloren gehen.

Gelöst wird die Aufgabe durch die erfindungsgemäßen Blends, wie sie im Hauptanspruch dargestellt sind. Die Unteransprüche betreffen verbesserte Ausführungsformen dieser Blends sowie deren Verwendung.

Die Erfindung betrifft somit Blends aus zumindest zwei Blockcopolymerkomponenten K1 und K2, jede Blockcopolymerkomponente basierend auf zumindest einem Blockcopolymer C1 beziehungsweise C2,

- wobei das zumindest eine Blockcopolymer C1 der Komponente K1 mindestens die Einheit P(A1)-P(B1)-P(A1) aus wenigstens einem Polymerblock P(B1) und wenigstens zwei Polymerblöcken P(A1) aufweist, wobei
  - P(A1) unabhängig voneinander Homo- oder Copolymerblöcke aus Monomeren A1 repräsentieren, wobei die Polymerblöcke P(A1) jeweils eine Erweichungstemperatur im Bereich von + 20 °C bis + 175 °C aufweisen,
  - P(B1) einen Homo- oder Copolymerblock aus Monomeren B1 repräsentiert, wobei der Polymerblock P(B1) eine Erweichungstemperatur im Bereich von - 130 °C bis + 10 °C aufweist,
  - die Polymerblöcke P(A1) und P(B1) nicht homogen miteinander mischbar sind,
- wobei das zumindest eine Blockcopolymer C2 der Komponente K2 mindestens die Einheit P(B2)-P(A2)-P(B2) aus wenigstens zwei Polymerblöcken P(B2) und wenigstens einem Polymerblock P(A2) aufweist, und wobei
  - P(A2) einen Homo- oder Copolymerblock aus Monomeren A2 repräsentiert, wobei der Polymerblock P(A2) jeweils eine Erweichungstemperatur im Bereich von + 20 °C bis + 175 °C aufweisen,
  - P(B2) unabhängig voneinander Homo- oder Copolymerblöcke aus Monomeren B2 repräsentieren, wobei die Polymerblöcke P(B2) jeweils eine Erweichungstemperatur im Bereich von - 130 °C bis + 10 °C aufweist,
  - die Polymerblöcke P(A2) und P(B2) nicht homogen miteinander mischbar sind,
  - und wobei die Polymerblöcke P(B1) und P(B2) sind als in Anspruch 1 definiert.
- und wobei der Blend ein zumindest zweiphasiges System ausbildet.

Dabei kann im einfachsten Fall die Komponente K1 lediglich aus den Blockcopolymeren C1 und/oder die Komponente K2 lediglich aus den Blockcopolymeren C2 bestehen.

Die Bezeichnung "zweiphasiges System" schließt hierbei ein System, in welchem eine Mikrophasentrennung auftritt, mit ein.

Im folgenden werden die Polymerblöcke P(A) auch als "Hartblöcke" und die Polymerblöcke P(B) als "Elastomerblöcke" bezeichnet. Hier und im weiteren bezeichnet A (ohne Index) ein (beliebiges) Monomer aus einer ersten Monomerengruppe [Gruppe der Monomere A, weiterhin auch einfach Gruppe G(A)] und B (ohne Index) ein (beliebiges) Monomer aus einer zweiten Monomerengruppe [Gruppe der Monomere B, weiterhin auch einfach Gruppe G(B)]. Die Bezeichnung A1 bezeichnet die in das Blockcopolymer C1 einpolymerisierten Monomere des Typs A, entsprechend B1 die Monomere des Typs B, welche in C1 eingebaut sind, A2 steht für die in das Blockcopolymer C2 eingebauten Monomere des Typs A und B2 für Monomere des Typs B im Blockcopolymer C2. Bei weiteren Polymeren (C3, C4...) wird diese Bezeichnung logisch fortgesetzt (A3, B3, A4, B4,...).

In diesem Sinne umfassen die Hartblöcke P(A) hier entsprechend die Polymerblöcke P(A1) sowie P(A2) und die Elastomerblöcke P(B) die Polymerblöcke P(B1) und P(B2). Weiterhin werden im folgenden die Blockcopolymere C1 und C2, welche die Einheit P(A1)-P(B1)-P(A1) beziehungsweise die Einheit P(B2)-P(A2)-P(B2) aufweisen, als Triblockcopolymere bezeichnet, unabhängig davon, ob sich außerdem weiteren Reste oder Copolymerblöcke an diesem Blockcopolymer befinden und welche dies gegebenenfalls sind. Blockcopolymere C2, welche die Einheit P(B2)-P(A2)-P(B2) aufweisen, werden insbesondere auch als inverse Triblockcopolymere bezeichnet.

Unter Erweichungstemperatur wird in diesem Zusammenhang bei amorphen Systemen die Glasübergangstemperatur und bei semikristallinen Polymeren die Schmelztemperatur verstanden. Glastemperaturen (und gegebenenfalls Schmelztemperaturen) werden als Ergebnisse aus quasistatischen Verfahren [sofern nicht anders angegeben Differential Scanning Calorimetry (DSC; konstante Aufheizrate 10 °C in 5 min, Schutzgasatmosphäre)] angegeben. Blockcopolymere mit inkompatiblen Blöcken und Blends weisen mehr als eine Glasübergangstemperatur auf, welche aus der Meßkurve separat bestimmt werden können.

Die eingesetzten Blockcopolymere C1 und C2 können in vorteilhaften Ausführungsformen der Erfindung weitere Strukturmerkmale aufweisen. Diese können beispielsweise durch folgende allgemeinen Formeln beschrieben werden:

$$P(B)\text{-}P(A)\text{-}P(B)\text{-}P(A)\text{-}P(B) \qquad (I)$$

$$[P(B)\text{-}P(A)]_nX \qquad (II)$$

$[P(A)\text{-}P(B)]_nX$ (III)

$[P(B)\text{-}P(A)]_nX[P(A)]_m$ (IV),

- wobei n = 3 bis 12, m = 3 bis 12 und X eine multifunktionelle Verzweigungseinheit darstellt, also ein chemisches Bauelement, über das mehrere Polymerarme miteinander verknüpft sind,
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von - 130 °C bis + 10 °C aufweisen.

Die Blockcopolymere mit zumindest einer mulitifunktionellen Verzweigungseinheit X werden im folgenden auch als Sternpolymere bezeichnet. Die Sternpolymere können dabei allein oder auch in Kombination mit linearen unverzweigten, verzweigten oder anderweitig strukturierten Blockcopolymeren C1 oder C2 im Sinne der Komponente K1 beziehungsweise K2 eingesetzt werden.

In einer sehr bevorzugten Ausführungsform der Erfindung werden im Sinne des Blockcopolymers C2 Sternpolymere des Typs (II) beigemischt.

Die strukturelle Einheit P(A2)-X-P(A2) ist dabei als Einheit P(A2) einer entsprechend höheren Kettenlänge aufzufassen, so daß C2 wiederum die Einheit P(B2)-P(A2)-P(B2) beinhaltet.

Bei vorteilhaften Sternpolymeren dieser Art unterscheiden sich zumindest zwei der n Polymerarme [P(B2)-P(A2)] in der chemischen Struktur, der Kettenlänge und/oder der Länge von Seitenketten. Insbesondere können vorteilhaft n unterschiedliche Polymerarme vorliegen.

Es ist ebenfalls möglich, Sternpolymere mit n identischen Polymerarmen einzusetzen.

Typische Einsatzkonzentration der inversen Triblockcopolymere C2 im Blend betragen bis zu 250 Gewichtsteile auf 100 Gewichtsteile des Triblockcopolymers C1, so daß vorteilhaft das Verhältnis $V_m$ der im Blend eingesetzten Menge $m_{K2}$ der Komponente K2 zu der im Blend eingesetzten Menge $m_{K1}$ der Komponente K1 durch die Beziehung $V_m = m_{K2}/m_{K1}, \leq 2{,}5$ beschrieben werden kann.

Die Polymerblöcke P(A2) und/oder P(B2) des inversen Blockcopolymers C2 besitzen in einer bevorzugten Weiterentwicklung der Erfindung die identische Homo- und/oder auch Copolymerzusammensetzung wie die Copolymerblöcke P(A1) beziehungsweise P(B1) der Triblockcopolymere C1.

Es kann jedoch auch vorteilhaft sein, wenn dies nicht der Fall ist. Die Polymerblöcke P(A2) und/oder P(B2) des inversen Blockcopolymers C2 werden dann bevorzugt derart gewählt, daß sie mit den Blöcken P(A1) beziehungsweise P(B1) des Triblockcopolymers C1 verträglich sind in dem Sinne, daß bei der Mischung bezüglich der verträglichen Polymerblöcke keine Phasenseparierung oder Mikrophasenseparierung auftritt bzw. diese Vermischung nicht zu der oben beschriebenen Phasenseparierung oder Mikrophasenseparierung beiträgt.

Die mittlere Kettenlängen $K_{L2}$ der Polymerblöcke P(A2) beziehungsweise P(B2) des inversen Triblockcopolymers C2 wird in bevorzugter Weise derart gewählt, daß sie die mittlere Kettenlänge $K_{L1}$ des mit ihr bevorzugt verträglichen Polymerblocks P(A1) beziehungsweise P(B1) des Triblockcopolymers C1 nicht übersteigt, vorteilhaft 10 % niedriger, sehr vorteilhaft 20 % niedriger ist als diese.

Der Polymerblock P(B2) kann vorteilhaft auch so gewählt werden, daß seine Länge höchstens der Hälfte der Länge des Polymerblocks P(B1) entspricht.

Bei den Polymerblöcken P(A), wie sie im Hauptanspruch oder in den vorteilhaften Ausführungsformen beschrieben sind, kann es sich um Polymerketten einer einzigen Monomersorte aus der Gruppe G(A) oder um Copolymere aus Monomeren verschiedener Strukturen aus der Gruppe G(A) handeln. Insbesondere können die eingesetzten Monomere A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe G(A). Das entsprechende gilt für die Polymerblöcke P(B) bezüglich der Monomere aus der Gruppe G(B).

Die Einheit P(A)-P(B)-P(A) kann dabei sowohl symmetrisch [entsprechend $P^1(A)\text{-}P(B)\text{-}P^2(A)$ mit $P^1(A) = P^2(A)$] als auch unsymmetrisch [etwa entsprechend der Formel $P^3(A)\text{-}P(B)\text{-}P^4(A)$ mit $P^3(A) \neq P^4(A)$, wobei aber sowohl $P^3(A)$ als auch $P^4(A)$ jeweils Polymerblöcke im Sinne der Definition für P(A) seien] aufgebaut sein.

Eine vorteilhafte Ausführung ist es, wenn zumindest ein Blockcopolymer, bevorzugt mehrere oder alle Blockcopolymere, einen symmetrischen Aufbau derart aufweisen, daß in der Kettenlänge und/oder der chemischen Struktur identische Polymerblöcke P(A) und/oder daß in der Kettenlänge und/oder der chemischen Struktur identische Polymerblöcke P(B)

vorliegen.
$P^3$(A) und $P^4$(A) können sich insbesondere in ihrer chemischen Zusammensetzung und/oder ihrer Kettenlänge unterscheiden. Das gleiche oben gesagte gilt für die inversen Triblockcopolymere auf Basis von P(B)-P(A)-P(B), die entweder auch symmetrisch oder unsymmetrisch vorliegen können.

Als Monomere für die Elastomerblöcke P(B) werden vorteilhaft Acrylmonomere (die Bezeichnung schließt die entsprechenden Methacrylmonomere ein) eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Glasübergangstemperaturen der Polymerblöcke P(B) auch in Kombination mit einem oder mehreren weiteren Monomeren von kleiner +10 °C bedingen. Entsprechendes gilt für die Wahl der Vinylmonomere.

Zur Erzielung einer Glasübergangstemperatur $T_G$ der Polymere von $T_G \leq 10°C$. werden entsprechend dem vorstehend und im weiteren gesagten die Monomere sehr bevorzugt derart ausgesucht und die mengenmäßige Zusammensetzung der Monomermischung vorteilhaft derart gewählt, daß sich nach der Gleichung (G1) (in Analogie zur Fox-Gleichung, vgl. T.G. Fox, Bull. Am. Phys. Soc. 1 (1956) 123) der gewünschte $T_G$-Wert für das Polymer ergibt.

$$\frac{1}{T_G} = \sum_i \frac{w_i}{T_{G,i}} \qquad \text{(G1)}$$

Hierin repräsentiert i die Laufzahl über die eingesetzten Monomere, $w_i$ den Massenanteil des jeweiligen Monomers i (Gew.-%) und $T_{G,i}$ die jeweilige Glasübergangstemperatur des Homopolymers aus den jeweiligen Monomeren i in K.

Für die Präparation der Polymerblöcke P(B) werden vorteilhaft zu 75 bis 100 Gew.-% Acrylsäure- und/oder Methacrylsäurederivate der allgemeinen Struktur

$$CH_2=CH(R^1)(COOR^2) \qquad \text{(V)}$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
und/oder bis zu 25 Gew.-% Vinylverbindungen (V), welche günstigenfalls funktionelle Gruppen enthalten.

Acrylmonomere, die sehr bevorzugt im Sinne der Verbindung (V) als Komponenten für Polymerblöcke P(B) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl- oder Norbornylacrylat und Isobornylacrylat.

Weiterhin können optional als Monomere im Sinne der Definition (V) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in $\alpha$-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (V) für die Elastomerblöcke P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

In einer bevorzugten Ausführungsform der erfinderischen Systeme enthält einer der oder enthalten mehrere der Polymerblöcke eine oder mehrere aufgepfropfte Seitenketten. Dabei wird nicht eingeschränkt, ob solche Systeme durch einen *graft-from*- (Aufpolymerisation einer Seitenketten ausgehend von einem bestehenden Polymerrückgrat) oder *graft*-to-Prozeß (Anbindung von Polymerketten an ein Polymerrückgrat über polymeranaloge Reaktionen) erhalten werden.
Insbesondere zur Herstellung solcher Blockcopolymere können als Monomere B derartig funktionalisierte Monomere eingesetzt werden, die einen *graft-from*-Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben. In diesem Zusammenhang sei auch die Möglichkeit genannt, über Makromonomere gezielt Seitenketten in die Polymerketten einzuführen. Die Makromonomere können wiederum aufgebaut sein entsprechend der Monomere B.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels UV-Bestrahlung

oder durch Bestrahlung mit schnellen Elektronen erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reaktiven Doppelbindungen einsetzen. Besonders bevorzugte Beispiele für entsprechende Comonomere sind Isopren und/oder Butadien, aber auch Chloropren.

Ausgangsmonomere für die Polymerblöcke P(A) werden bevorzugt derart ausgewählt, daß die resultierenden Polymerblöcke P(A) mit den Polymerblöcken P(B) nicht mischbar sind und dementsprechend Mikrophasenseparation eintritt. Vorteilhafte Beispiele für Verbindungen, welche als Monomere A eingesetzt werden, sind Vinylaromaten, die auch alkyliert sein können, Methylmethacrylat, Cyclohexylmethacrylat, Isobornylmethacrylat und Isobornylacrylat.
Besonders bevorzugte Beispiele sind Methylmethacrylat und Styrol, wobei diese Aufzählung keinen Anspruch auf Vollständigkeit erhebt.

Weiterhin können die Polymerblöcke P(A) aber auch als Copolymer aufgebaut sein, das zu mindestens 75 % aus den vorstehenden Monomeren A, das zu einer hohen Erweichungstemperatur führt, oder einem Gemisch dieser Monomere bestehen kann, aber bis zu 25 % Monomere B enthält, die zu einer Erniedrigung der Erweichungstemperatur des Polymerblocks P(A) führen. In diesem Sinne seien beispielhaft aber nicht ausschließlich Alkylacrylate genannt, die entsprechend der Struktur (V) und dem hierzu gesagten definiert sind.

Auch für die Polymerblöcke P(A) werden die Monomere vorteilhaft derart gewählt, daß entsprechend der Gleichung G1 die gewünschte Glasübergangstemperatur erzielt wird.

In einer weiteren günstigen Ausführungsform der erfinderischen Haftklebemasse sind Polymerblöcke P(A) und/oder P(B) derart funktionalisiert, daß eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der für die erfindungsgemäßen Haftklebesysteme eingesetzten Triblockcopolymere und inversen Triblockcopolymere ist, daß ihre Molmasse $M_n$ zwischen 25.000 und 600.000 g/mol, bevorzugt zwischen 30.000 und 400.000 g/mol, besonders bevorzugt zwischen 50.000 g/mol und 300.000 g/mol liegt. Der Anteil der Polymerblöcke P(A) oder des Polymerblocks P(A) liegt vorteilhaft zwischen 5 und 49 Gewichtsprozent am jeweiligen Triblockcopolymer, bevorzugt zwischen 7,5 und 35 Gewichtsprozent, besonders bevorzugt zwischen 10 und 30 Gewichtsprozent. Die Polydispersität der Triblockcopolymere P(A)-P(B)-P(A) und P(B)-P(A)-P(B) liegt bevorzugt bei kleiner 3, gegeben durch den Quotienten D aus Massenmittel $M_w$ und Zahlenmittel $M_n$ der Molmassenverteilung.

Die Polymerblöcke P(A) und P(B) sind erfindungsgemäß unverträglich (nicht homogen miteinander mischbar), so daß ein zumindest zweiphasiges System vorliegt. Sehr bevorzugt kommt es bei den erfindungsgemäßen Blends zu einer Mikrophasentrennung. Hierbei kann aufgrund der chemischen Bindungen zwischen den unverträglichen Blöcken nur eine begrenzte Entmischung stattfinden, die sich trennenden Phasen können nur eine begrenzte Größe erreichen. Gleichartige Blöcke können sich jedoch zu Domänen zusammenlagern, wobei Größe und Art der Domänen durch das Mengenverhältnis der Blöcke zueinander beeinflußt werden kann.

Die Kettenlängen der Polymerblöcke P(A) und der Polymerblöcke P(B) sowie das Verhältnis der Kettenlängen der Polymerblöcke P(A) zu denen der Polymerblöcke P(B) für das Triblockcopolymer P(A)-P(B)-P(A) werden in sehr vorteilhafter Vorgehensweise so gewählt, daß die Blockcopolymere P(A) als disperse Phase (Domänen) in einer kontinuierlichen Matrix der Polymerblöcke P(B) vorliegen. Dies ist bevorzugt der Fall bei einem Gehalt an Polymerblöcken P(A) von kleiner als ca. 25 Gew.-%. Die Domänen können bevorzugt kugelförmig oder verzerrt kugelförmig vorliegen. Die Ausbildung von hexagonal gepackten zylindrischen Domänen der Polymerblöcke P(A) ist ebenfalls im erfinderischen Sinne möglich.
In einer weiteren Ausführungsform zielt man auf eine asymmetrische Gestaltung der Triblockcopolymere P(A)-P(B)-P(A) und/oder P(B)-P(A)-P(B), wobei in linearen Systemen die Blocklängen der endständigen Polymerblöcke P(A) unterschiedlich sind.

In einer erfinderisch besonders bevorzugten Auslegung wird das Molekulargewicht $M_n$ (Zahlenmittel) des Mittelblocks P(B) auf $M_n$ = 250.000 g/mol für das Triblockcopolymer P(A)-P(B)-P(A) begrenzt, um eine Beschichtbarkeit der Haftklebemasse aus der Schmelze zu erleichtern. In einer weiteren erfinderisch bevorzugten Auslegung ist das Molekulargewicht $M_n$ des inversen Triblockcopolymers kleiner oder gleich demjenigen des Triblockcopolymers P(A)-P(B)-P(A).

Weiterhin kann es vorteilhaft sein, den obengenannten Blend aus Triblockcopolymer und inversem Triblockcopolymer Diblockcopolymere des Typs P(A)-P(B) beizumischen, wobei zur Herstellung der entsprechenden Polymerblöcke P(A) und P(B) die gleichen Monomere wie oben genutzt werden können. Außerdem kann es von Vorteil sein, der aus den Triblockcopolymeren P(A)-P(B)-P(A) und P(B)-P(A)-P(B), mit oder ohne Beimischung eines oder mehrerer Diblockcopolymere, bestehenden Haftklebemasse zur Verbesserung ihrer Eigenschaften Polymere P'(A) und/oder P'(B) zuzusetzen.

Dementsprechend betrifft eine weitere Ausführungsform der Erfindung ein Blend aus zumindest einem Triblockcopolymer C1 und zumindest einem inversen Triblockcopolymer C2 entsprechend dem oben gesagten mit zumindest einem Diblockcopolymer C3 der allgemeinen Form P(A3)-P(B3),

- wobei die Polymerblöcke P(A3) (der einzelnen Diblockcopolymere) unabhängig voneinander Homo- oder Copolymerblöcke aus den Monomeren A repräsentieren, wobei die Polymerblöcke P(A3) jeweils eine Erweichungstemperatur im Bereich von + 20 °C bis + 175 °C aufweisen,
- und wobei die Polymerblöcke P(B3) (der einzelnen Diblockcopolymere) unabhängig voneinander Homo- oder Copolymerblöcke aus den Monomeren B3 repräsentieren, wobei die Polymerblöcke P(B3) jeweils eine Erweichungstemperatur im Bereich von - 130 °C bis + 10 °C aufweisen,

und/oder mit zumindest einem Polymeren P'(A4) und/oder P'(B4),

- wobei die Polymere P'(A4) Homo- und/oder Copolymere aus den Monomeren A4 repräsentieren, wobei die Polymere P'(A4) jeweils eine Erweichungstemperatur im Bereich von + 20 °C bis + 175 °C aufweisen,
- wobei die Polymere P'(B4) Homo- und/oder Copolymere aus den Monomeren B repräsentieren, wobei die Polymere P'(B4) jeweils eine Erweichungstemperatur im Bereich von - 130 °C bis + 10 °C aufweisen,
- wobei die Polymere P'(A4) beziehungsweise P'(B4) bevorzugt mit den Polymerblöcken P(A4) beziehungsweise P(B4) mischbar sind.

Sofern sowohl Polymere P'(A4) und Polymere P'(B4) zugemischt sind, werden diese vorteilhaft derart gewählt, daß die Polymere P'(A4) und P'(B4) nicht homogen miteinander mischbar sind.

Als Monomere für die Diblockcopolymere P(A3)-P(B3), für die Polymere P'(A4) beziehungsweise P'(B4) werden bevorzugt die bereits genannten Monomere der Gruppe G(A) beziehungsweise der Gruppe G(B) eingesetzt.

Zumindest ein Diblockcopolymer, bevorzugt mehrere oder alle Diblockcopolymere weisen bevorzugt eine Molmasse $M_n$ zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität $D = M_w/M_n$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt. Auch die Diblockcopolymere können vorteilhaft eine oder mehrere aufgepfropfte Seitenketten aufweisen.

Typische Einsatzkonzentration von Diblockcopolymeren im Blend betragen bis zu 250 Gewichtsteile auf 100 Gewichtsteile des Triblockcopolymer/inversen Triblockcopolymer-Gemisches. Die Polymerblöcke P(A3) und/oder P(B3) der Diblockcopolymere C3 können als Homo- und auch als Copolymerblöcke aufgebaut sein. Sie werden entsprechend dem oben gesagten vorteilhaft derart gewählt, daß sie mit den Blockcopolymeren P(A1) beziehungsweise P(B1) der Triblockcopolymere C1 und/oder den Blockcopolymeren P(A2) beziehungsweise P(B2) der inversen Triblockcopolymere C2 verträglich sind.

Die Kettenlänge der Polymerblöcke P(A3) beziehungsweise P(B3) ist in bevorzugter Weise derart gewählt, daß sie die des mit ihr bevorzugt verträglichen (mischbaren) Polymerblocks nicht übersteigt, vorteilhaft 10 % niedriger, sehr vorteilhaft 20 % niedriger ist als diese. Die Blöcke P(B3) können vorteilhaft auch so gewählt werden, daß ihre jeweilige Länge die Hälfte der mittleren Länge der Blöcke P(B1) und/oder P(B2) der Triblockcopolymere C1 beziehungsweise C2 nicht übersteigt.

Entsprechendes läßt sich für die Polymere P'(A4) beziehungsweise P'(B4) sagen. Diese können als Homo- und auch als Copolymere aufgebaut sein. Sie werden entsprechend dem weiter oben gesagten vorteilhaft derart gewählt, daß sie mit den Blöcken P(A1) und/oder P(A2) beziehungsweise P(B1) und/oder P(B2) der Triblockcopolymere C1 beziehungsweise C2 und/oder den Blöcken P(A3) beziehungsweise P(B3) der Diblockcopolymere C3 verträglich sind.

Die Kettenlänge der Polymere P'(A4) beziehungsweise P'(B4) ist in bevorzugter Weise derart gewählt, daß sie die des mit ihr bevorzugt verträglichen (mischbaren) Polymerblocks nicht übersteigt, vorteilhaft 10 % niedriger, sehr vorteilhaft 20 % niedriger ist als diese.

Zur Herstellung der Triblockcopolymere C1 und C2 bzw. für den Fall der erfinderischen Auslegung die Diblöcke C3 können prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt. Wählt man eine Methode der radikalischen Polymerisation werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (Via) oder (VIb) eingesetzt:

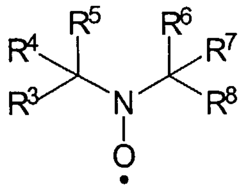

(VIa)

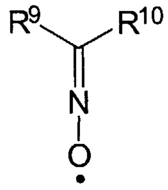

(VIb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen der (VIa) oder (VIb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Blockcopolymere in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Weiterhin vorteilhaft kann das erfindungsgemäße genutzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren A ist. Die Molmasse des herzustellenden Polymerblocks wird durch das Verhältnis von Initiatorkonzentration zu Monomerkonzentration vorgegeben. Zum Aufbau der Blockstruktur für das Triblockcopolymer P(A)-P(B)-P(A) werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) anpolymerisiert. Alternativ kann P(A)-P(B)-M durch eine geeignete difunktionelle Verbindung gekuppelt werden. Auf diesem Weg sind auch Sternblockcopolymere $(P(B)\text{-}P(A))_n$ zugänglich.

Zum Aufbau der Blockstruktur für das inverse Triblockcopolymer P(B)-P(A)-P(B) werden zunächst die Monomere B für den Aufbau eines Polymerblocks P(B) hinzugegeben, dann wird anschließend durch Zugabe der Monomere A ein Polymerblock P(A) angeknüpft und nachfolgend durch erneute Zugabe von Monomeren B ein weiterer Polymerblock P(B) anpolymerisiert. Alternativ kann P(B)-P(A)-M durch eine geeignete difunktionelle Verbindung gekuppelt werden. Auf diesem Weg sind auch Sternblockcopolymere $(P(A)\text{-}P(B))_n$ zugänglich.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R'''-S-C(S)-S-R''' (Macromolecules 2000, 33, 243-245), mittels derer zur Herstellung von Triblockcopolymeren P(A)-P(B)-P(A) in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden.

Zur Herstellung von inversen Triblockcopolymeren P(B)-P(A)-P(B) werden in einem ersten Schritt Monomere für die Endblöcke P(B) polymerisiert. In einem zweiten Schritt wird anschließend der Mittelblock P(A) synthetisiert. Nach der Polymerisation der Endblöcke P(B) kann die Reaktion abgebrochen und reinitiiert werden. Ferner kann auch ohne Reaktionsunterbrechung sequentiell polymerisiert werden.

In einer sehr vorteilhaften Variante werden beispielsweise die Trithiocarbonate (VII) und (VIII) oder die Thioverbindungen (IX) und (X) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann. Der Phenylring Φ kann

optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

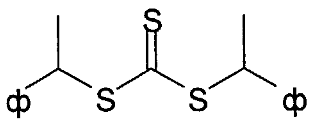

(VII)

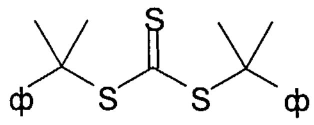

(VIII)

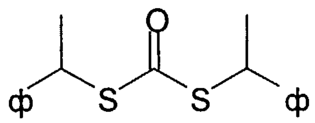

(IX)

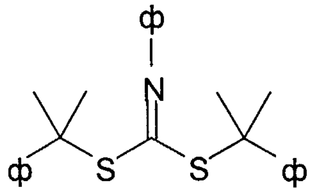

(X)

Außerdem können Thioester der allgemeinen Struktur $R^{IV}$-C(S)-S-$R^{V}$ zum Einsatz kommen, insbesondere, um asymmetrische Systeme herzustellen. Dabei können $R^{IV}$ und $R^{V}$ unabhängig von einander gewählt werden und $R^{IV}$ ein Rest aus einer der folgenden Gruppen i) bis iv) und $R^{V}$ ein Rest aus einer der folgenden Gruppen i) bis iii) sein kann:

i) $C_1$- bis $C_{18}$-Alkyl, $C_2$- bis $C_{18}$ Alkenyl, $C_2$- bis $C_{18}$-Alkinyl, jeweils linear oder verzweigt; Aryl-, Phenyl-, Benzyl-, aliphatische und aromatische Heterozyklen.

ii) -$NH_2$, -NH-$R^{VI}$, -$NR^{VI}R^{VII}$, -NH-C(O)-$R^{VI}$, -$NR^{VI}$-C(O)-$R^{VII}$ -NH-C(S)-$R^{VI}$, -$NR^{VI}$-C(S)-$R^{VII}$,

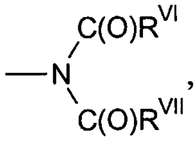 , 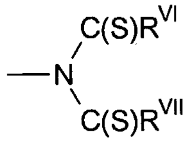 , 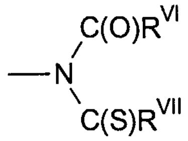

wobei $R^{VI}$ und $R^{VII}$ unabhängig voneinander gewählte Reste aus der Gruppe i) sind.

iii) -S-$R^{VIII}$, -S-C(S)-$R^{VIII}$, wobei $R^{VIII}$ ein Rest aus einer der Gruppen i) oder ii) sein kann.

iv) -O-$R^{VIII}$, -O-C(O)-$R^{VIII}$, wobei $R^{VIII}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Einen Ausweg bietet hier die Nachinitiierung (PCT/EP01/06734)

Erfindungsgemäß wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Zur erfindungsgemäßen Weiterentwicklung, insbesondere für die Verwendung als Haftklebemassen, können den triblockcopolymerhaltigen Blends Klebharze beigemischt werden. Prinzipiell lassen sich alle in dem entsprechenden Elastomerblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Elastomerblock verträglich sind. Der Gewichtsanteil der Harze am Blockcopolymer beträgt typischerweise bis zu 40 Gew. %, mehr bevorzugt bis zu 30 Gew. %.

Für eine spezielle Art der Ausführung der Erfindung können auch Harze verwendet werden, die mit dem Polymerblock P(A) verträglich sind.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Blends, insbesondere für die Verwendung als Haftklebemasse, durch die physikalische Vernetzung über die Polymerblöcke P(A) erzeugt. Die so erhaltene physikalische Vernetzung ist typischerweise thermoreversibel. Im Sinne einer nichtreversiblen Vernetzung können die Blends zusätzlich chemisch vernetzt werden. Hierzu können die acrylatblockcopolymerhaltigen Blends optional verträgliche Vernetzersubstanzen enthalten. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Eine vorteilhafte Verwendung des erfindungsgemäßen Blends als Haftklebemasse ist diejenige zur Herstellung von Acrylathaftklebebändern. Hierzu wird der Blend auf einen Träger beschichtet. Als Trägermaterial sind prinzipiell BOPP, PET, Vlies, PVC, Metallfolien, Schaum oder Trennpapiere (Glassine, HDPE, LDPE) geeignet. Die Beschichtung erfolgt aus Lösung oder aus der Schmelze.

Für die Beschichtung aus der Schmelze wird das Lösemittel daher bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Die Beschichtung erfolgt vorteilhaft durch eine Schmelzdüse oder durch eine Extrusionsdüse auf ein Trägermaterial, wobei die Orientierung durch Reckung des Haftklebebandfilms erzeugt wird. Die Extrusionsbeschichtung erfolgt dabei bevorzugt durch eine Extrusionsdüse. Extrusionsdüsen kann man in drei Kategorien unterteilen: T-Düse, Fischschwanz-Düse und Bügel-Düse. Die einzelnen Typen unterscheiden sich durch die Gestalt ihres Fließkanals.

Die Blockcopolymerblends können in hervorragender Weise zur Herstellung von orientierten Blockcopolymerhaftklebemassen eingesetzt werden. Hierzu wird bevorzugt mit einer Bügeldüse auf einen Träger beschichtet, und zwar derart, daß durch eine Relativbewegung von Düse zu Träger eine Polymerschicht auf dem Träger entsteht. Bei der Extrusionsdüsenbeschichtung ist die Spaltbreite der Düse am Austritt größer als die Schichtdicke des beschichteten Haftklebemassenfilms. Die Orientierung entsteht somit durch eine Reckung. Die Orientierung der Haftklebemasse bleibt nach der Beschichtung durch die Selbstorganisation der Haftklebemasse erhalten, d.h. es bildet sich ein physikalisches

Netzwerk aus Hartblockdomänen P(A). In analoger Weise kann eine Orientierung von Acrylatblockcopolymerhaftklebemassen auch mit der Schmelzdüsenbeschichtung erzeugt werden.

Die Messung der Orientierung der Klebemasse kann mit einem Polarimeter, mit Infrarot-Dichroismus oder mit Röntgenstreuung erfolgen. Eine weitere besonders bevorzugte Methode ist die Messung des Rückschrumpfes im freien Film. Diese Messmethoden sind im Detail unter den experimentellen Testmethoden (s. DE 101 56 088.5) beschrieben.

In dem Falle, dass die Blends zusätzlich vernetzt werden, kann die Vernetzung z.B. durch kurzzeitige UV-Bestrahlung im Bereich von 200 bis 400 nm mit handelsüblichen Quecksilber-Hochdruck oder Mitteldrucklampen mit einer Leistung von z.B. 80 bis 240 W/cm oder durch thermische Vernetzung in einem Temperaturbereich zwischen 70 bis 140 °C erfolgen. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Prinzipiell ist es auch möglich, die Blends nach der Beschichtung mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Bestrahlungsdosen bewegen sich zwischen 5 bis 150 kGy, insbesondere zwischen 20 und 100 kGy.

Weiterhin ist Inhalt der Erfindung die Verwendung der erfindungsgemäßen Blends als Haftklebemassen zur Herstellung von ein- und doppelseitigen Haftklebebändern sowie für Transfer-Tapes.

Beispielhafte Produktaufbauten für mit den erfindungsgemäßen Blends hergestellten haftklebrigen Systemen können vorteilhaft sein:

- Haftklebesysteme mit einem einschichtigen Produktaufbau, wobei die Schicht aus einer Haftklebemasse entsprechend der vorstehenden Beschreibung besteht;
- Haftklebesysteme mit einem mehrschichtigen Produktaufbau, insbesondere einen zwei- oder dreischichtigen Produktaufbau, wobei zumindest eine der Schichten aus einer Haftklebemasse entsprechend der vorstehenden Beschreibung besteht und bevorzugt eine Dicke von mindestens 10 μm, besonders bevorzugt von mindestens 25 μm aufweist, und wobei bevorzugt eine der weiteren Schichten aus einem Elastomer besteht,
- Haftklebesysteme mit zumindest einer Trägerschicht.

Zur Herstellung von stripfähigen Systemen können die Haftklebebänder insbesondere wie folgt aufgebaut sein aus:

a] einschichtigen Klebstofffolien bestehend aus einer Haftklebeschicht, welche als Basispolymer einen erfindungsgemäßen Triblockcopolymer-Blend enthält.
b] mehrschichtigen Klebstofffolien, welche als Haftklebeschicht ein- oder beidseitig einen oder mehrere erfindungsgemäße Triblockcopolymer-Blends enthält.

Es ist für die erfindungsgemäßen stripfähigen Systeme von besonderem Vorteil, wenn die Haftklebemasse eine Reißdehnung von mindestens 300 % und eine Zugfestigkeit von mindestens 3 MPa aufweist. (Prüfmethode s. DE 101 29 608.8).

Experimente

Folgende Testmethoden wurden angewendet, um die klebtechnischen Eigenschaften der hergestellten Haftklebesysteme zu evaluieren.

Testmethoden

180° Klebkrafttest (Test A)

Ein 20 mm breiter Streifen einer auf silikonisiertem Trennpapier beschichtete Haftklebemasse wurde auf eine 25 μm dicke mit einem Saran Primer versehende PET-Folie umlaminiert und anschließend dieses Haftklebebandmuster auf eine Stahlplatte aufgebracht. Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten

Bedingungen durchgeführt.

Gelpermeationschromatograpie (GPC) Test B)

Die Bestimmung der mittleren Molekulargewichte $M_n$ (Zahlenmittel) und $M_w$ (Gewichtsmittel) und der Polydispersität D erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, $10^3$ Å, ID 8,0 mm x 50 mm verwendet. Zur Auftrennung wurden die Säulen PSS-SDV, 5 µ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen Polystyrol-Standards gemessen.

Scherstandzeiten (Test C)

Die Prüfung erfolgte gemäß PSTC-7. Auf eine 25 µm dicke PET-Folie wird eine 50 µm dicke Haftklebeschicht aufgebracht. Ein 1,3 cm breiter Streifen dieses Musters wird auf einem polierten Stahlplättchen auf einer Länge von 2 cm mit einer 2 kg-Rolle durch dreimaliges doppeltes Überrollen verklebt. Die Plättchen werden für 30 min unter Testbedingungen (Temperatur und Luftfeuchtigkeit), aber ohne Last equilibriert. Dann wird das Testgewicht angehängt, so daß eine Scherbeanspruchung parallel zur Verklebungsfläche entsteht, und die Zeit gemessen, bis die Verklebung versagt. Ist eine Haltezeit von 10.000 min erreicht, so wird der Versuch vor Versagen der Klebbindung abgebrochen.

Prüfmusterherstellung

*Herstellung eines RAFT-Reglers:*

Die Herstellung des Reglers Bis-2,2'-phenylethyltrithiocarbonats erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3H).

Herstellung der Triblockcopolymere P(A)-P(B)-P(A):

Herstellung von Polystyrol (PS1):

In einem für die radikalische Polymerisation konventionellem 2 L Reaktor werden unter Stickstoffatmosphäre 362 g Styrol und 3,64 g Regler Bis-2,2'-phenylethyltrithiocarbonat vorgelegt. Es wird auf 110°C Innentemperatur erhitzt und mit 0,15g Vazo 67® (DuPont) initiiert. Nach 10 Stunden Reaktionszeit werden 100 g Toluol hinzugegeben. Nach 24 Stunden Reaktionszeit wird mit weiteren 0,1 g Vazo 67® initiiert und weitere 24 Stunden polymerisiert. Während der Polymerisation steigt die Viskosität merklich an. Zur Kompensation werden 150 g Toluol als Endverdünnung nach 48 Stunden hinzugegeben.

Zur Aufreinigung wurde das Polymer in 4.5 Liter Methanol gefällt, über eine Fritte abfiltriert und anschließend im Vakuumtrockenschrank getrocknet.

Die Durchführung der Gelpermeationschromatographie (Test B) gegen Polystyrol Standards ergab $M_n$ = 29300 g/mol und $M_W$ = 35500 g/mol.

Herstellung von Polystyrol (PS2):

In einem für die radikalische Polymerisation konventionellem 2 L Reaktor werden unter Stickstoffatmosphäre 1500 g Styrol und 9,80 g Regler Bis-2,2'-phenylethyltrithiocarbonat vorgelegt. Es wird auf 120 °C Innentemperatur erhitzt und mit 0,1 g Vazo 67® (DuPont) initiiert. Nach 24 Stunden Reaktionszeit werden 200 g Toluol hinzugegeben und mit weiteren 0,1 g Vazo 67® initiiert. Nach 36 Stunden Reaktionszeit werden weitere 200 g Toluol hizugegeben. Während der Polymerisation steigt die Viskosität merklich an. Nach 48 Stunden wird die Polymerisation abgebrochen.

Zur Aufreinigung wurde das Polymer in 4,5 Liter Methanol gefällt, über eine Fritte abfiltriert und anschließend im Vakuumtrockenschrank getrocknet.

Die Durchführung der Gelpermeationschromatographie (Test B) gegen Polystyrol-Standards ergab $M_n$ = 36.100 g/mol und $M_W$ = 44.800 g/mol.

Triblockcopolymer P(A)-P(B)-P(A) (T1)

Ein für radikalische Polymerisationen konventioneller Reaktor wurde mit 44.7 g Trithiocarbonat-funktionalisiertem Polystyrol (PS1), 442 g 2-Ethylhexylacrylat, 35 g Acrylsäure und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert und dann mit 0,1 g Vazo 67® (DuPont) nachinitiiert. Nach Beendigung der Polymerisation nach 48 h durch Abkühlung auf Raumtemperatur wurde zur Isolierung des Hotmelts in einem Vakuumtrockenschrank bei 50°C und 10 mm Druck das Lösemittel entfernt. Die Durchführung der Gelpermeationschromatographie (Test B) gegen Polystyrolstandards ergab $M_n$ = 104.700 g/mol und $M_W$ = 204.100 g/mol.

Triblockcopolymer P(A)-P(B) =P(A)(T2)

Ein für radikalische Polymerisationen konventioneller Reaktor wurde mit 45.9 g Trithiocarbonat-funktionalisiertem Polystyrol (PS1), 442 g 2-Ethylhexylacrylat, 17 g Acrylsäure und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert und dann mit 0,1 g Vazo 67® (DuPont) nachinitiiert. Nach Beendigung der Polymerisation nach 48 h durch Abkühlung auf Raumtemperatur wurde zur Isolierung des Hotmelts in einem Vakuumtrockenschrank bei 50°C und 10 mm Druck das Lösemittel entfernt. Die Durchführung der Gelpermeationschromatographie (Test B) gegen Polystyrolstandards ergab $M_n$ = 90.900 g/mol und $M_W$ = 182.000 g/mol.

Triblockcopolymer P(A)-P(B)-P(A)(T3)

Ein für radikalische Polymerisationen konventioneller Reaktor wurde mit 700 g Trithiocarbonat-funktionalisiertem Polystyrol (PS2), 3063 g n-Butylacrylat und 1600 g Aceton befüllt. Unter Rühren und Stickstoffgas wurde auf 65 °C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert und dann mit 0,1 g Vazo 67® (DuPont) nachinitiiert. Nach Beendigung der Polymerisation nach 48 h durch Abkühlung auf Raumtemperatur wurde zur Isolierung des Hotmelts in einem Vakuumtrockenschrank bei 50 °C und 10 mm Druck das Lösemittel entfernt. Die Durchführung der Gelpermeationschromatographie (Test B) gegen Polystyrolstandards ergab $M_n$ = 111.300 g/mol und $M_W$ = 197.000 g/mol.

Die oben genannten Triblockcopolymere wurden sowohl als Mischkomponenten als auch als Referenzsubstanzen eingesetzt. Zur klebtechnischen Beurteilung wurden diese Polymere auf ein 25 µm dicke und mit Saran geprimerte PET-Folie aus Lösung beschichtet und im Trockenschrank anschließend vom Lösemittel befreit. Der Masseauftrag betrug jeweils 50 g/m². Zur klebtechnischen Beurteilung wurden die Testmethoden A und C durchgeführt.

Herstellung der inversentriblockcopolymere P(B)-P(A)-P(B):

Triblockcopolymer P(B)-P(A)-P(B) (IT1):

In einem 2000 ml Schlenkgefäß wurden 800 g 2-Ethylhexylacrylat, 63 g Acrylsäure, 400 ml Aceton, 0,64 g des Bis-2,2'-phenylethyltrithiocarbonats und 0,12 g Vazo 67™ (Fa. DuPont) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 150 ml Toluol sowie 86.3 g Styrol hinzugegeben. Nach weiteren 24 h Reaktionszeit bei 90 °C wurde mit 0,1 g Vazo 67™ (Fa. DuPont) nachinitiiert und nach 48 h zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert ($M_n$ = 90200 g/mol, $M_{w/n}$ = 1.92).

Triblockcopolymer P(B)-P(A)-P(B) (IT2):

In einem 2000 ml Schlenkgefäß wurden 800 g 2-Ethylhexylacrylat, 30.8 g Acrylsäure, 400 ml Aceton, 0,64 g des Bis-2,2'-phenylethyltrithiocarbonats und 0,12 g Vazo 67™ (Fa. DuPont) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 150 ml Toluol sowie 83.8 g Styrol hinzugegeben. Nach weiteren 24 h Reaktionszeit bei 90 °C wurde mit 0,1 g Vazo 67™ (Fa. DuPont) nachinitiiert und nach 48 h wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert ($M_n$ = 82400 g/mol, $M_{w/n}$ = 1.85).

Triblockcopolymer P(B)-P(A)-P(B) (IT3):

In einem 2000 ml Schlenkgefäß wurden 800 g n-Butylacrylat, 400 ml Toluol, 0,64 g des Bis-2,2'-phenylethyltrithiocarbonats und 0,12 g Vazo 67™ (Fa. DuPont) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 120 g Styrol hinzugegeben. Nach weiteren 24 h Reaktionszeit bei 90 °C wurde mit 0,1 g Vazo 67™ (Fa. DuPont) nachinitiiert und nach 48 h wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert ($M_n$ = 98400 g/mol, $M_{w/n}$ = 1.81).

Herstellung der Polymerblends aus P(A)-P(B)-P(A) und P(B)-P(A)-P(B):

Allgemeine Vorschrift:

Die vom Lösemittel befreiten Triblockcopolymere P(A)-P(B)-P(A) und P(B)-P(A)-P(B) wurden in den entsprechenden Mengenverhältnissen zusammengegeben und anschließend eine 30 %-ige Lösung in Toluol hergestellt. Zur klebtechnischen Beurteilung wurden diese Polymere auf ein 25 μm dicke und mit Saran geprimerte PET-Folie aus Lösung beschichtet und im Trockenschrank anschließend vom Lösemittel befreit. Der Masseauftrag betrug jeweils 50 $g/m^2$. Zur klebtechnischen Beurteilung wurden die Testmethoden A und C durchgeführt.

Beispiel 1:

Zu 100 g P(A)-P(B)-P(A) (T1) wurden 30 g P(B)-P(A)-P(B) (IT1) hinzugegeben.

Beispiel 2:

Zu 100 g P(A)-P(B)-P(A) (T2) wurden 30 g P(B)-P(A)-P(B) (IT2) hinzugegeben.

Beispiel 3:

Zu 100 g P(A)-P(B)-P(A) (T3) wurden 30 g P(B)-P(A)-P(B) (IT3) hinzugegeben.

Beispiel 4:

Zu 100 g P(A)-P(B)-P(A) (T3) wurden 20 g P(B)-P(A)-P(B) (IT3) hinzugegeben.

Beispiel 5:

Zu 100 g P(A)-P(B)-P(A) (T3) wurden 40 g P(B)-P(A)-P(B) (IT3) hinzugegeben.

Herstellung der Polymerblends aus P(A)-P(B)-P(A) und P(B) :

Referenzbeispiel R1:

Zu 100 g P(A)-P(B)-P(A) (T3) wurden 40 g Polybutylacrylat mit einem mittleren Molekulargewicht $M_W$ = 210000 g/mol und $M_{w/n}$ = 3.42 (s. Test B) hinzugegeben und compoundiert.

***Resultate***

Zur Überprüfung des erfindungsgemäßen Verfahrens wurden zunächst einige konventionelle Triblockcopolymere des Typs P(A)-P(B)-P(A) hergestellt. Die hergestellten Polymere unterscheiden sich durch ihre Mittelblockzusammensetzung als auch durch den Anteil der Endblöcke P(B). Um die Effekte des Polymerblendings von konventionellen Triblockcopolymeren und inversen Triblockcopolymeren zu beurteilen, wurden zunächst die klebtechnischen Eigenschaften der Referenzsubstanzen (P(A)-P(B)-P(A) Triblockcopoylmere) ermittelt. Die Ergebnisse sind in Tabelle 1 dargestellt.

| Tabelle 1 (Referenzsubstanzen) | | |
|---|---|---|
| Triblockcopolymere P(A)-P(B)-P(A) | KK-Stahl [N/cm] | SSZ 10 N RT [min] |
| T1 | 5,1 | +10000 |
| T2 | 3,8 | +10000 |
| T3 | 3,6 | +10000 |
| KK: Klebkraft auf Stahl<br>SSZ: Scherstandzeiten bei Raumtemperatur und 10 N Belastung<br>50 g/$m^2$ Masseauftrag | | |

Der Tabelle 1 kann entnommen werden, dass von der Zusammensetzung des Mittelblocks die Klebkraft abhängig ist. Weiterhin weisen alle Triblockcopolymere eine sehr hohe Kohäsion, wie den Scherstandzeiten von größer 10000 Minuten entnommen werden kann, auf.

Für das erfindungsgemäße Verfahren wurden verschiedene Polymerblends hergestellt (Beispiele 1 - 5). Die hinzugemischten inversen Triblockcopolymere besitzen in etwa die gleiche Comonomerzusammensetzung von P(A) und P(B), unterscheiden sich aber durch das Molekulargewicht der einzelnen Blöcke. In der Regel besitzen die inversen Triblockcopolymere ein etwas geringeres mittleres Molekulargewicht. Es wurden zunächst immer 30 g des inversen Triblockcopolymers hinzugegeben. Weiterhin wurde aber auch mit den Beispielen 3 - 5 eine Variation der Mengenverhältnisse vorgenommen. Um den Effekt des Polymerblendings zu quantifizieren, wurden wiederum die klebtechnischen Prüfungen durchgeführt. Die Ergebnisse sind in Tabelle 2 zusammengefasst.

| Tabelle 2 | | |
|---|---|---|
| Beispiele | KK-Stahl [N/cm] | SSZ 10 N RT [min] |
| 1 | 5,8 | +10000 |
| 2 | 4.5 | +10000 |
| 3 | 4.4 | +10000 |
| 4 | 4.0 | +10000 |
| 5 | 5.1 | +10000 |
| R1 | 5.7 | 1345 |
| KK: Klebkraft auf Stahl<br>SSZ: Scherstandzeiten bei Raumtemperatur und 10 N Belastung<br>50 g/$m^2$ Masseauftrag | | |

Mit den Beispielen 1 - 5 wurde belegt, dass durch den Zusatz der inversen Triblockcopolymere P(B)-P(A)-P(B) in allen Fällen ein Steigerung der Klebkraft erzielt wurde. Weiterhin blieb in allen Fällen die gute Kohäsion der Klebmasse erhalten. Referenzbeispiel 1 wurde zusätzlich hinzugenommen, da ein weiterer Weg zur Klebkraftsteigerung z.B. der Zusatz eines Polymers mit identischer Zusammensetzung zu P(B) des Triblockcopolymers P(A)-P(B)-P(A) darstellen könnte. Dies funktioniert tatsächlich, aber in diesem Fall verliert die Haftklebemasse R1 die Kohäsion. Dieses Phänomen ist von vielen Zusätzen bekannt, die die Klebkraft steigern. Bei den erfindungsgemäßen Polymerblends blieb die Kohäsion erhalten. Alle Polymerblends waren transparent, was auf eine gute Mischbarkeit hindeutete.

## Patentansprüche

**1.** Blend aus zumindest zwei Komponenten K1 und K2, jede Komponente basierend auf zumindest einem Blockcopolymer C1 beziehungsweise C2,

- wobei das zumindest eine Blockcopolymer C1 der Komponente K1 mindestens die Einheit P(A1)-P(B1)-P(A1) aus wenigstens einem Polymerblock P(B1) und wenigstens zwei Polymerblöcken P(A1) aufweist, wobei

- P(A1) unabhängig voneinander Homo- oder Copolymerblöcke aus Monomeren A1 repräsentiert, wobei die Polymerblöcke P(A1) jeweils eine Erweichungstemperatur im Bereich von + 20 °C bis + 175 °C aufweisen,
- P(B1) einen Homo- oder Copolymerblock aus Monomeren B1 repräsentiert, wobei der Polymerblock P(B1) eine Erweichungstemperatur im Bereich von - 130 °C bis + 10 °C aufweist,
- die Polymerblöcke P(A1) und P(B1) nicht homogen miteinander mischbar sind,

• wobei das zumindest eine Blockcopolymer C2 der Komponente K2 mindestens die Einheit P(B2)-P(A2)-P(B2) aus wenigstens zwei Polymerblöcken P(B2) und wenigstens einem Polymerblock P(A2) aufweist, und wobei

- P(A2) einen Homo- oder Copolymerblock aus Monomeren A2 repräsentiert, wobei der Polymerblock P(A2) eine Erweichungstemperatur im Bereich von + 20 °C bis + 175 °C aufweisen,
- P(B2) unabhängig voneinander Homo- oder Copolymerblöcke aus Monomeren B2 repräsentiert, wobei die Polymerblöcke P(B2) jeweils eine Erweichungstemperatur im Bereich von - 130 °C bis + 10 °C aufweist,
- die Polymerblöcke P(A2) und P(B2) nicht homogen miteinander mischbar sind,

• wobei die Monomere Polymerblöcke P(B1) und P(B2) jeweils zu 75 bis 100 Gew.-% aus der Gruppe der Acrylsäure- und/oder Methacrylsäurederivate der allgemeinen Struktur $CH_2=C(R^1)(COOR^2)$ gewählt werden; mit $R^1$ = H oder $CH_3$ und $R^2$ = H oder lineare, verzweigte oder ringförmige, gesättigte oder ungesättigte Kohlenwasserstoffreste mit 1 bis 30 Kohlenstoffatomen,
• und wobei der Blend ein zumindest zweiphasiges System ausbildet.

2. Blend nach Anspruch 1, **dadurch gekennzeichnet, daß** das Verhältnis V der im Blend eingesetzten Menge $m_{K2}$ der Komponente K2 zu der im Blend eingesetzten Menge $m_{K1}$ der Komponente K1 bis zu 250 Gewichtsteile K2 auf 100 Gewichtsteile K1 beträgt, also $V = m_{K2}/m_{K1} \leq 2{,}5$.

3. Blend nach zumindest einem der vorangehenden Ansprüche, **dadurch gekennzeichnet, daß** die Blöcke P(A1) mit den Blöcken P(A2) und/oder deren jeweils korrespondierenden Polymere P'(A1) mit P'(A2) und/oder die Blöcke P(B1) mit den Blöcken P(B2) und/oder deren jeweils korrespondierenden Polymere P'(B1) mit P'(B2) verträglich sind.

4. Blend nach zumindest einem der vorangegangenen Ansprüche, **dadurch gekennzeichnet, daß** die Polymerblöcke P(A1) und die Polymerblöcke P(A2) und/oder die Polymerblöcke P(B1) und die Polymerblöcke P(B2) eine identische Homo- und/oder Copolymerzusammensetzung besitzen.

5. Blend nach zumindest einem der vorangegangenen Ansprüche, **dadurch gekennzeichnet, daß** die mittlere Kettenlänge LB2 der Polymerblöcke P(B2) des Blockcopolymers C2 die mittlere Kettenlänge LB1 des Polymerblocks P(B1) des Blockcopolymers C1 nicht übersteigt, wobei vorteilhaft LB2 mindestens 10 % kleiner als LB1, sehr vorteilhaft LB2 mindestens 20 % kleiner ist als LB1 ist.

6. Blend nach zumindest einem der vorangegangenen Ansprüche, **dadurch gekennzeichnet, daß** als Blockcopolymer C2 Sternpolymere des Typs $[P(A2)\text{-}P(B2)]_nX$ beigemischt werden,

- wobei n = 3 bis 12 und X eine multifunktionelle Verzweigungseinheit darstellt, also ein chemisches Bauelement, über das die Polymerarme [P(A2)-P(B2)] miteinander verknüpft sind,
- wobei die Polymerblöcke P(A2) unabhängig voneinander Homo- oder Copolymerblöcke aus den Monomeren A2 repräsentieren, wobei die Polymerblöcke P(A2) jeweils eine Erweichungstemperatur im Bereich von + 20 °C bis + 175 °C aufweisen,
- und wobei die Polymerblöcke P(B2) unabhängig voneinander Homo- oder Copolymerblöcke aus den Monomeren B2 repräsentieren, wobei die Polymerblöcke P(B2) jeweils eine Erweichungstemperatur im Bereich von - 130 °C bis + 10 °C aufweisen.

7. Blend nach Anspruch 6, **dadurch gekennzeichnet, daß** sich zumindest zwei der n Polymerarme [P(A2)-P(B2)] der Sternpolymere in ihrer Kettenlänge und/oder ihrer chemischen Struktur unterscheiden, daß insbesondere n unterschiedliche Polymerarme vorliegen.

8. Blend nach zumindest einem der vorangegangenen Ansprüche, **dadurch gekennzeichnet, daß** das Blockcopolymer C1 zumindest eines der folgenden Kriterien aufweist:

- eine Molmässe $M_n$ zwischen 10.000 und 600.000 g/mol, bevorzugt zwischen 30.000 und 400.000 g/mol, besonders bevorzugt zwischen 50.000 und 300.000 g/mol,
- eine Polydispersität $D = M_w/M_n$ von nicht mehr als 3,
- einen Anteil der Polymerblöcke P(A1) zwischen 5 und 49 Gew.-%, bevorzugt zwischen 7,5 und 35 Gew.-%, insbesondere zwischen 10 und 30 Gew.-%, bezogen auf die Zusammensetzung des Blockcopolymers C1.

**9.** Blend nach zumindest einem der vorangegangenen Ansprüche, **dadurch gekennzeichnet, daß** weiterhin

• zumindest ein Diblockcopolymer C3 der allgemeinen Formel P(A3)-P(B3) zugesetzt wird,

- wobei die Polymerblöcke P(A3) unabhängig voneinander Homo- oder Copolymerblöcke aus den Monomeren A3 repräsentieren, wobei die Polymerblöcke P(A) jeweils eine Erweichungstemperatur im Bereich von + 20 °C bis + 175 °C aufweisen,
- und wobei die Polymerblöcke P(B3) unabhängig voneinander Homo- oder Copolymerblöcke aus den Monomeren B3 repräsentieren, wobei die Polymerblöcke P(B3) jeweils eine Erweichungstemperatur im Bereich von - 130 °C bis + 10 °C aufweisen,

• und/oder mit zumindest einem Polymeren P'(A4) und/oder P'(B4),

- wobei die Polymere P'(A4) Homo- und/oder Copolymere aus den Monomeren A4 repräsentieren, wobei die Polymere P'(A4) jeweils eine Erweichungstemperatur im Bereich von + 20 °C bis + 175 °C aufweisen,
- wobei die Polymere P'(B4) Homo- und/oder Copolymere aus den Monomeren B4 repräsentieren, wobei die Polymere P'(B4) jeweils eine Erweichungstemperatur im Bereich von - 130 °C bis + 10 °C aufweisen,
- und wobei bevorzugt die Polymere P'(A4) mit den Polymerblöcken P(A1), P(A2) und/oder P(A3) und/oder die Polymere P'(A4) mit den Polymerblöcken P(B1), P(B2) und/oder P(B3) mischbar sind.

**10.** Haftklebemasse nach zumindest einem der vorangegangenen Ansprüche, **dadurch gekennzeichnet, daß** das Diblockcopolymer eines oder mehrere der folgenden Kriterien aufweist:

- eine Molmasse $M_n$ zwischen 5.000 und 600.000 g/mol, bevorzugt zwischen 15.000 und 400.000 g/mol, besonders bevorzugt zwischen 30.000 und 300.000 g/mol,
- eine Polydispersität $D = M_w/M_n$ von nicht mehr als 3,
- einen Anteil der Polymerblöcke P(A) zwischen 3 und 50 Gew.-%, bevorzugt zwischen 5 und 35 Gew.-%, bezogen auf die Diblockcopolymer-zusammensetzung.

**11.** Haftklebemasse nach zumindest einem der vorangegangenen Ansprüche, **dadurch gekennzeichnet, daß** der Blend aus der Schmelze heraus weiterverarbeitet wird, daß er insbesondere auf einen Träger aufgetragen wird.

**12.** Verwendung eines Blends nach zumindest einem der vorangehenden Ansprüche als Basis für eine Haftklebemasse, insbesondere für eine Haftklebemasse für ein Haftklebeband, wobei die Haftklebemasse als ein- oder doppelseitiger Film auf einem Träger vorliegt.

## Claims

**1.** Blend of at least two components K1 and K2, each component being based on at least one block copolymer C1 or C2 respectively,

• the at least one block copolymer C1 of component K1 comprising at least the unit P(A1)-P(B1)-P(A1), comprising at least one polymer block P(B1) and at least two polymer blocks P(A1), where

- P(A1) independently at each occurrence represents homopolymer or copolymer blocks of monomers A1, the polymer blocks P(A1) each having a softening temperature in the range from +20°C to +175°C,
- P(B1) represents a homopolymer or copolymer block of monomers B1, the polymer block P(B1) having a softening temperature in the range from -130°C to +10°C,
- the polymer blocks P(A1) and P(B1) are not homogeneously miscible with one another,

• the at least one block copolymer C2 of component K2 comprising at least the unit P(B2)-P(A2)-P(B2), comprising at least two polymer blocks P(B2) and at least one polymer block P(A2), where

- P(A2) represents a homopolymer or copolymer block of monomers A2, the polymer block P(A2) having a softening temperature in the range from +20°C to +175°C,
- P(B2) independently at each occurrence represents homopolymer or copolymer blocks of monomers B2, the polymer blocks P(B2) each having a softening temperature in the range from -130°C to +10°C,
- the polymer blocks P(A2) and P(B2) are not homogeneously miscible with one another,

• the monomers of polymer blocks P(B1) and P(B2) being selected in each case to an extent of 75 to 100% by weight from the group of acrylic and/or methacrylic acid derivatives of the general structure $CH_2=C(R^1)(COOR^2)$, where $R^1$ = H or $CH_3$ and $R^2$ = H or linear, branched or cyclic, saturated or unsaturated hydrocarbon radicals having 1 to 30 carbon atoms,
• and the blend forming an at least two-phase system.

2. Blend according to Claim 1, **characterized in that** the ratio V of the amount $m_{K2}$ of component K2 used in the blend to the amount $m_{K1}$ of component K1 used in the blend is up to 250 parts by weight of K2 per 100 parts by weight of K1, i.e., $V = m_{K2}/m_{K1} \leq 2.5$.

3. Blend according to at least one of the preceding claims, **characterized in that** the blocks P(A1) are compatible with the blocks P(A2) and/or their respective corresponding polymers P'(A1) with P'(A2)
and/or the blocks P(B1) are compatible with the blocks P(B2) and/or their respective corresponding polymers P'(B1) with P'(B2).

4. Blend according to at least one of the preceding claims, **characterized in that** the polymer blocks P(A1) and the polymer blocks P(A2) and/or the polymer blocks P(B1) and the polymer blocks P(B2) possess an identical homopolymer and/or copolymer composition.

5. Blend according to at least one of the preceding claims, **characterized in that** the average chain length LB2 of the polymer blocks P(B2) of the block copolymer C2 does not exceed the average chain length LB1 of the polymer block P(B1) of the block copolymer C1, advantageously LB2 being at least 10% smaller than LB1, very advantageously LB2 being at least 20% smaller than LB1.

6. Blend according to at least one of the preceding claims, **characterized in that** as block copolymer C2 star polymers of the type $[P (A2)-P (B2)]_nX$ are admixed,

- where n = 3 to 12 and X is a polyfunctional branching unit, i.e., a chemical structural element via which the polymer arms [P(A2)-P(B2)] are linked to one another,
- where the polymer blocks P(A2) independently at each occurrence represent homopolymer or copolymer blocks of the monomers A2, the polymer blocks P(A2) each having a softening temperature in the range from +20°C to +175°C,
- and where the polymer blocks P(B2) independently at each occurrence represent homopolymer or copolymer blocks of the monomers B2, the polymer blocks P(B2) each having a softening temperature in the range from -130°C to +10°C.

7. Blend according to Claim 6, **characterized in that** at least two of the n polymer arms [P(A2)-P(B2)] of the star polymers differ in their chain length and/or their chemical structure **in that** in particular n different polymer arms are present.

8. Blend according to at least one of the preceding claims, **characterized in that** the block copolymer C1 exhibits at least one of the following criteria:

- a molar mass $M_n$ of between 10 000 and 600 000 g/mol, preferably between 30 000 and 400 000 g/mol, with particular preference between 50 000 and 300 000 g/mol,
- a polydispersity $D = M_w/M_n$ of not more than 3,
- a polymer block P(A1) fraction of between 5 and 49% by weight, preferably between 7.5 and 35% by weight, in particular between 10 and 30% by weight, based on the composition of the block copolymer C1.

**9.** Blend according to at least one of the preceding claims, **characterized in that** additionally

• at least one diblock copolymer C3 of the general formula P(A3)-P(B3) is added,

- wherein the polymer blocks P(A3) independently of one another represent homopolymer or copolymer blocks of the monomers A3, the polymer blocks P(A) each having a softening temperature in the range from +20°C to +175°C,
- and wherein the polymer blocks P(B3) independently of one another represent homopolymer or copolymer blocks of the monomers B3, the polymer blocks P(B3) each having a softening temperature in the range from -130°C to +10°C,

• and/or comprising at least one polymer P'(A4) and/or P'(B4),

- wherein the polymers P'(A4) represent homopolymers and/or copolymers of the monomers A4, the polymers P'(A4) each having a softening temperature in the range from +20°C to +175°C,
- wherein the polymers P'(B4) represent homopolymers and/or copolymers of the monomers B4, the polymers P'(B4) each having a softening temperature in the range from -130°C to +10°C,
- and wherein preferably the polymers P'(A4) are miscible with the polymer blocks P(A1), P(A2) and/or P(A3) and/or the polymers P' (A4) are miscible with the polymer blocks P(B1), P(B2) and/or P(B3).

**10.** Pressure-sensitive adhesive according to at least one of the preceding claims, **characterized in that** the diblock copolymer exhibits one or more of the following criteria:

- a molar mass $M_n$ of between 5000 and 600 000 g/mol, preferably between 15 000 and 400 000 g/mol, with particular preference between 30 000 and 300 000 g/mol,
- a polydispersity $D = M_w/M_n$ of not more than 3,
- a polymer block P(A) fraction of between 3 and 50% by weight, preferably between 5 and 35% by weight, based on the diblock copolymer composition.

**11.** Pressure-sensitive adhesive according to at least one of the preceding claims, **characterized in that** the blend is processed further from the melt, **in that** in particular it is applied to a backing.

**12.** Use of a blend according to at least one of the preceding claims as the basis for a pressure-sensitive adhesive, in particular for a pressure-sensitive adhesive for a pressure-sensitive adhesive tape, the pressure-sensitive adhesive being present as a single-sided or double-sided film on a backing.

**Revendications**

**1.** Mélange d'au moins deux composants K1 et K2, chaque composant étant à base d'au moins un copolymère séquencé C1 ou C2,

- ledit au moins un copolymère séquencé C1 du composant K1 comprenant au moins l'unité P(A1)-P(B1)-P(A1) constituée d'au moins une séquence polymère P(B1) et d'au moins deux séquences polymères P(A1),

  - les P(A1) représentant indépendamment les unes des autres des séquences d'homo- ou de copolymère de monomères A1, les séquences polymères P(A1) présentant à chaque fois une température de ramollissement dans la plage allant de +20 °C à +175 °C,
  - P(B1) représentant une séquence d'homo- ou de copolymère de monomères B1, la séquence polymère P(B1) présentant une température de ramollissement dans la plage allant de -130 °C à +10 °C,
  - les séquences polymères P(A1) et P(B1) n'étant pas miscibles de manière homogène l'une avec l'autre,

- ledit au moins un copolymère séquencé C2 du composant K2 comprenant au moins l'unité P(B2)-P(A2)-P(B2) constituée d'au moins deux séquences polymères P(B2) et au moins une séquence polymère P(A2),

  - P(A2) représentant une séquence d'homo- ou de copolymère de monomères A2, la séquence polymère P(A2) présentant une température de ramollissement dans la plage allant de +20 °C à +175 °C,
  - les P(B2) représentant indépendamment les unes des autres des séquences d'homo- ou de copolymères

de monomères B2, les séquences polymères P(B2) présentant à chaque fois une température de ramollissement dans la plage allant de -130 °C à +10 °C,
- les séquences polymères P(A2) et P(B2) n'étant pas miscibles de manière homogène l'une avec l'autre,

- les monomères séquences polymères P(B1) et P(B2) étant chacun choisis à hauteur de 75 à 100 % en poids dans le groupe des dérivés de l'acide acrylique et/ou de l'acide méthacrylique de structure générale $CH_2=C(R^1)(COOR^2)$ ; avec $R^1$ = H ou $CH_3$ et $R^2$ = H ou des radicaux hydrocarbonés saturés ou insaturés, linéaires, ramifiés ou cycliques, de 1 à 30 atomes de carbone,
- et le mélange formant un système au moins biphasé.

**2.** Mélange selon la revendication 1, **caractérisé en ce que** le rapport V entre la quantité $m_{K2}$ du composant K2 utilisée dans le mélange et la quantité $m_{K1}$ du composant K1 utilisée dans le mélange est de jusqu'à 250 parties en poids de K2 sur 100 parties en poids de K1, c'est-à-dire $V = m_{K2}/m_{K1} \leq 2{,}5$.

**3.** Mélange selon au moins l'une quelconque des revendications précédentes, **caractérisé en ce que** les séquences P(A1) sont compatibles avec les séquences P(A2) et/ou leurs polymères correspondants respectifs P'(A1) avec P'(A2),
et/ou les séquences P(B1) avec les séquences P(B2) et/ou leurs polymères correspondants respectifs P'(B1) avec P'(B2).

**4.** Mélange selon au moins l'une quelconque des revendications précédentes, **caractérisé en ce que** les séquences polymères P(A1) et les séquences polymères P(A2) et/ou les séquences polymères P(B1) et les séquences polymères P(B2) présentent une composition d'homo- et/ou de copolymère identique.

**5.** Mélange selon au moins l'une quelconque des revendications précédentes, **caractérisé en ce que** la longueur de chaîne moyenne LB2 des séquences polymères P(B2) du copolymère séquencé C2 ne dépasse pas la longueur de chaîne moyenne LB1 de la séquence polymère P(B1) du copolymère séquencé C1, LB2 étant avantageusement au moins 10 % inférieure à LB1, LB2 étant très avantageusement au moins 20 % inférieure à LB1.

**6.** Mélange selon au moins l'une quelconque des revendications précédentes, **caractérisé en ce que** des polymères en étoile de type $[P(A2)-P(B2)]_nX$ sont incorporés en tant que copolymère séquencé C2,

- n = 3 à 12 et X représentant une unité de ramification multifonctionnelle, c'est-à-dire un élément constitutif chimique par lequel les bras polymères [P(A2)-P(B2)] sont reliés les uns avec les autres,
- les séquences polymères P(A2) représentant indépendamment les unes des autres des séquences d'homo- ou de copolymères des monomères A2, les séquences polymères P(A2) présentant à chaque fois une température de ramollissement dans la plage allant de +20 °C à +175 °C,
- et les séquences polymères P(B2) représentant indépendamment les unes des autres des séquences d'homo- ou de copolymère des monomères B2, les séquences polymères P(B2) présentant à chaque fois une température de ramollissement dans la plage allant de -130 °C à +10 °C.

**7.** Mélange selon la revendication 6, **caractérisé en ce qu'**au moins deux des n bras polymères [P(A2)-P(B2)] des polymères en étoile diffèrent au niveau de leur longueur de chaîne et/ou de leur structure chimique, n bras polymères différents étant notamment présents.

**8.** Mélange selon au moins l'une quelconque des revendications précédentes, **caractérisé en ce que** le copolymère séquencé C1 présente au moins un des critères suivantes :

- une masse molaire $M_n$ comprise entre 10 000 et 600 000 g/mol, de préférence entre 30 000 et 400 000 g/mol, de manière particulièrement préférée entre 50 000 et 300 000 g/mol,
- une polydispersité $D = M_w/M_n$ inférieure ou égale à 3,
- une proportion de séquences polymères P(A1) comprise entre 5 et 49 % en poids, de préférence entre 7,5 et 35 % en poids, notamment entre 10 et 30 % en poids, par rapport à la composition du copolymère séquencé C1.

**9.** Mélange selon au moins l'une quelconque des revendications précédentes, **caractérisé en ce qu'**en outre

- au moins un copolymère diséquencé C3 de formule générale P(A3)-P(B3) est ajouté,

- les séquences polymères P(A3) représentant indépendamment les unes des autres des séquences d'homo-ou de copolymère des monomères A3, les séquences polymères P(A) présentant à chaque fois une température de ramollissement dans la plage allant de +20 °C à +175 °C,
- et les séquences polymères P(B3) représentant indépendamment les unes des autres des séquences d'homo-ou de copolymères des monomères B3, les séquences polymères P(B3) présentant à chaque fois une température de ramollissement dans la plage allant de -130 °C à +10 °C,

- et/ou avec au moins un polymère P' (A4) et/ou P'(B4),

- les polymères P' (A4) représentant des homo- et/ou copolymères des monomères A4, les polymères P'(A4) présentant à chaque fois une température de ramollissement dans la plage allant de +20 °C à +175 °C,
- les polymères P' (B4) représentant des homo- et/ou copolymères des monomères B4, les polymères P'(B4) présentant à chaque fois une température de ramollissement dans la plage allant de -130 °C à +10 °C,
- et les polymères P'(A4) étant de préférence miscibles avec les séquences polymères P(A1), P(A2) et/ou P (A3) et/ou les polymères P' (A4) avec les séquences polymères P(B1), P(B2) et/ou P(B3).

**10.** Adhésif de contact selon au moins l'une quelconque des revendications précédentes, **caractérisé en ce que** le copolymère diséquencé présente un ou plusieurs des critères suivantes :

- une masse molaire $M_n$ comprise entre 5 000 et 600 000 g/mol, de préférence entre 15 000 et 400 000 g/mol, de manière particulièrement préférée entre 30 000 et 300 000 g/mol,
- une polydispersité $D = M_w/M_n$ inférieure ou égale à 3,
- une proportion de séquences polymères P(A) comprise entre 3 et 50 % en poids, de préférence entre 5 et 35 % en poids, par rapport à la composition du copolymère diséquencé.

**11.** Adhésif de contact selon au moins l'une quelconque des revendications précédentes, **caractérisé en ce que** le mélange est transformé à partir de la masse fondue, notamment est appliqué sur un support.

**12.** Utilisation d'un mélange selon au moins l'une quelconque des revendications précédentes en tant que base pour un adhésif de contact, notamment pour un adhésif de contact pour une bande adhésive de contact, l'adhésif de contact se présentant sur un support sous la forme d'un film simple ou double face.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9635725 A
- US 5194455 A
- EP 0343467 B1
- DE 2743979 A1
- US 5073611 A
- US 5741543 A
- US 3468972 A
- US 3595941 A
- US 3239478 A
- US 3935338 A
- EP 0451920 B1
- US 5851664 A
- US 251 H1
- US 5314962 A
- EP 0921170 A1
- US 5403658 A
- US 5292795 A
- WO 0012645 A
- WO 0192415 A
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1
- EP 0106734 W
- DE 10156088
- DE 10129608


### In der Beschreibung aufgeführte Nicht-Patentliteratur


- **HAWKER.** *Beitrag zur Hauptversammlung der American Chemical Society,* 1997
- **HUSEMANN.** *Beitrag zum IUPAC World-Polymer Meeting,* 1998
- *Macromolecules,* 1995, vol. 28, 7886
- *Macromolecules,* 2000, vol. 33, 243-245
- **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- **SKELHORNE.** Electron Beam Processing, in Chemistry and Technology of UV and EB formulation for Coatings, Inks and Paints. SITA, 1991, vol. 1
- *Synth. Comm.,* 1988, vol. 18 (13), 1531